# EUROPEAN PATENT SPECIFICATION

(11) **EP 3 229 994 B1**
(45) Date of publication and mention of the grant of the patent: **02.08.2023**
(21) Application number: 15705842.1
(22) Date of filing: 30.01.2015
(51) Int. Cl.: B22F 3/105, B29C 67/00, B22F 3/24, B23K 10/02, B23K 15/00, B23K 26/00, B23K 26/14, B23K 26/342, B23K 26/70, B23P 9/04, B23P 15/00, B24B 39/06, B24C 1/10, B33Y 10/00, B33Y 30/00, C21D 7/06, B22F 10/25, B22F 10/85, B33Y 40/00, B33Y 40/20, B23K 103/04, B23K 103/14, C22F 1/18, B23K 26/144

(54) **ADDITIVE MANUFACTURING AND INTEGRATED IMPACT POST-TREATMENT**
SCHICHTWEISE HERSTELLUNGSPROZESS MIT INTEGRIETEM SCHLAGBEHANDLUNG
MÉTHODE DE PRODUCTION PAR FABRICATION ADDITIVE ET POST-TRAITEMENT AU MOYEN D'IMPACTS INTÉGRÉ

(30) Priority: 09.12.2014 GB 201421857
(43) Date of publication of application: 18.10.2017
(73) Proprietor: BAE SYSTEMS plc, London SW1Y 5AD (GB)
(72) Inventor: SIDHU, Jagjit, Bristol South Gloucestershire BS34 7QW (GB); WESCOTT, Andrew David, Bristol South Gloucestershire BS34 7QW (GB)
(74) Representative: BAE SYSTEMS plc Group IP Department
(86) International application number: PCT/GB2015/050246
(87) International publication number: WO 2016/092253

(56) References cited:
- WO-A1-2012/152259
- WO-A1-2014/072699
- WO-A1-2014/094882
- US-A- 5 301 863
- US-A1- 2013 197 683
- US-A1- 2014 255 198
- US-A1- 2014 334 924
- US-A1- 2014 367 894
- US-B1- 6 338 765

## Description

### FIELD OF THE INVENTION

This invention relates to additive manufacturing (AM) and in particular to apparatus and a method to relieve stress in a component manufactured by an AM process.

### BACKGROUND

Additive manufacturing (AM) is a manufacturing process that is able to produce a functional complex part, layer by layer, without moulds or dies. This process uses a powerful heat source such as a laser beam or a welding arc to melt a controlled amount of metal in the form of metallic powder or wire, which is then deposited, initially, on a base plate. Subsequent layers are then built up upon each preceding layer. As opposed to conventional machining processes, this computer-aided manufacturing (CAM) technology builds complete functional parts or, alternatively, builds features on existing components, by adding material rather than by removing it.

Currently known AM manufacturing techniques include: Laser Blown Powder, Laser Powder Bed, and Wire and Arc technologies. Laser Blown Powder technology will be focused upon, here, but broad details of Laser Powder Bed and Wire and Arc technologies are as follows.

Laser Powder Bed technology uses a laser to melt metallic powder contained in a powder bed. The work piece is mounted within the powder bed and the surface of the powder is levelled off so as to just cover the surface of the work piece. The laser is then scanned over the work piece along a path which defines the shape of the component to be manufactured. Powder is melted to this shape and solidifies to a layer of metal on the work piece in the desired shape. The powder is then re-levelled, slightly higher, and the process is repeated until the component has been fully formed.

Wire and Arc technology, instead of using a laser as a heat source and metallic powder as the incremental material, uses a known welding arc to melt additive layer material in the form of a wire. The process is carried out on a similar scale to conventional welding but with many more "passes" being used to construct the component.

In the Laser Blown Powder process, during deposition of the initial layer(s), the laser beam is directed at a piece of starting material or "parent plate" to create a weld pool in the parent plate to which the powder is added. The powder is carried to the focal point of the laser in a precisely directed carrier gas such as Argon.

It is a problem with this type of manufacturing that, during weld pool creation, the work piece is subject to intense localised heating. This heating creates steep thermal gradients in the work piece between the molten material in the weld pool and the cold material which surrounds it. If transverse compressive stresses in the work piece, which are caused by very hot expanding material, exceed the yield point of the material then compressive plastic yielding (CPY) will occur in the material surrounding the weld. On cooling and shrinkage of the work piece, high tensile residual transverse stresses will be created across the weld and these will be balanced by residual compressive stresses further away from the weld. It is these residual compressive stresses which cause buckling distortion when they exceed a critical buckling load (CBL) for the parent material of the work piece. This is a particular difficulty when working with thin section material.

During cooling of the work piece, the solidification rate of the material is a determining factor for the final microstructure. The microstructure of the material plays an essential role in controlling mechanical properties. Microstructure morphologies which have been observed with prior art AM methods commonly show large columnar grains growing vertically from bottom to top of the work piece build. This type of grain structure produces mechanical properties which are unfavourable compared to fine grained equi-axed structures and those of wrought material.

US2014/367894 discloses an additive manufacturing (AM) subsystem for performing an AM operation to form a 3D part. The 3D part may be formed using a plurality of distinct material layers layered one on top of another. The system may also involve at least one of a laser peening (LP) subsystem and a High Velocity Laser Accelerated Deposition (HVLAD) subsystem. The LP subsystem may be used for laser peening a selected subquantity of the layers, to impart improved hardness to the selected subquantity of the layers and/or to the overall 3D part.

WO2014/072699 discloses a method for forming a metallic component by additive layer manufacturing including mounting a work piece to ALM manufacturing apparatus including measuring means in the form of load cells to measure stresses tending to distort the work piece, while performing the ALM process, measuring stresses tending to distort the component with the load cells and, if they are above a predetermined threshold, stress relieving the work piece with a pulsed laser while still mounted to the apparatus to reduce distortion to a predetermined level.

US6338765 discloses methods of treatment for work products of materials such as steel, bronze, plastic, etc. and particularly welded steel bodies by pulse impact energy, preferably ultrasonic, to relax fatigue and aging and extend expectant life.

US2013/197683 discloses A method for manufacturing involving performing fused deposition modeling of powders or wire material of metal, intermetallic compounds, ceramic and composite functional gradient materials by layer using a welding gun on a substrate layer via a numerical control gas shielded welding beam or laser beam according to a track specified by a numerical control code for each layer. A micro-roller or a micro-extrusion unit is installed at a contact area between melted and softened areas. The micro-roller or the micro-extrusion unit synchronously moves along with fused deposition area, which results in compressing and processing of the fused deposition area during the fused deposition modeling.

WO2012/152259 discloses a method for producing, repairing and/or replacing a component, in particular a blade element of a gas turbine in an aircraft engine. Said method includes the following steps: applying a layer of material, powder being fused using energy radiation; compacting a selected region by applying pressure thereto.

It is accordingly an aim of the present invention to overcome at least some of the difficulties with prior art AM methods.

### SUMMARY OF THE INVENTION

The invention provides a method of mitigating distortion for each layer during the building of additive layer manufactured parts. Not only is distortion controlled but the internal microstructure of the final part can be refined, thereby improving mechanical properties.

In a first aspect, the present invention provides a method of forming an object by additive layer manufacturing as defined in claim 1.

The step of peening may comprise the plurality of impact treating devices simultaneously striking a plurality of different points on the modified workpiece.

The modified workpiece comprises a first surface and a second surface. The first surface may be contiguous with the second surface. Peening comprises the plurality of impact treating devices simultaneously striking a region on the first surface and a region on the second surface.

The region on the first surface and the region on the second surface may be contiguous regions. The region on the first surface and the region on the second surface may contact along an edge of the modified workpiece.

At least one of the plurality of independently controllable impact treatment devices may be a hydraulically driven impact treatment tool.

Each impact treatment device may strike the modified workpiece with a frequency of up to 20Hz.

The layer of material formed on the workpiece may be 2mm to 3mm thick.

The additive manufacturing method may be wire and arc manufacturing.

The plurality of independently controllable impact treatment devices may be arranged as an array.

At least one of the impact treatment devices may be coupled to an articulated robot arm.

An impact treatment device and the heat source may be end effectors of a common articulated robot arm.

The step of cooling isperformed by a forced cooling device. An impact treatment device and the forced cooling device may be end effectors of a common articulated robot arm.

At least two impact treatment device comprises a peening element (e.g. a drill bit) with which the modified workpiece is peened. The shape of a portion of the peening element (e.g. the shape of a cross-section of the peening element) may be selected from the group of shapes: rectangular, chisel-shaped, L-shaped, recessed, circular, or polygonal.

In a further aspect, the present invention provides additive layer manufacturing apparatus as defined in claim 11.

In a further aspect, the present invention provides a computer readable medium having computer-executable instructions adapted to cause Additive Manufacturing apparatus to operate in accordance with the method of any of the above aspects.

### BRIEF DESCRIPTION OF THE DRAWINGS

Figure 1 is a schematic illustration (not to scale) of apparatus according to an embodiment of the invention;
Figure 2 is a schematic illustration (not to scale) showing multiple views of a hydraulic impact treatment tool;
Figure 3 is a schematic illustration (not to scale) showing two hydraulic impact treatment tools performing an impact treatment process;
Figure 4 is a micrograph showing the effect of the impact treatment process on a workpiece; and
Figure 5 is a schematic illustration (not to scale) showing multiple alternative shapes for the end of a drill bit of a hydraulic impact treatment tool.

### DETAILED DESCRIPTION

The terminology "Additive Manufacturing" is used herein to refer to all additive processes that may be used to produce functional, complex objects, layer by layer, without moulds or dies e.g. by providing material (e.g. metal or plastic) typically in the form of a powder or a wire, and, using a powerful heat source such as a laser beam, electron beam or an electric, or plasma welding arc, melting an amount of that material and depositing the melted material (e.g. on a base plate/work piece), and subsequently building layers of material upon each preceding layer.

Additive Manufacture (AM) may also be known *inter alia* as 3D printing, Direct Digital Manufacturing (DDM), Digital Manufacturing (DM), Additive Layer Manufacturing (ALM), Rapid Manufacturing (RM), Laser Engineering Net Shaping (LENS), Direct Metal Deposition, Direct Manufacturing, Electron Beam Melting, Laser Melting, Freeform Fabrication, Laser Cladding, Direct Metal Laser Sintering.

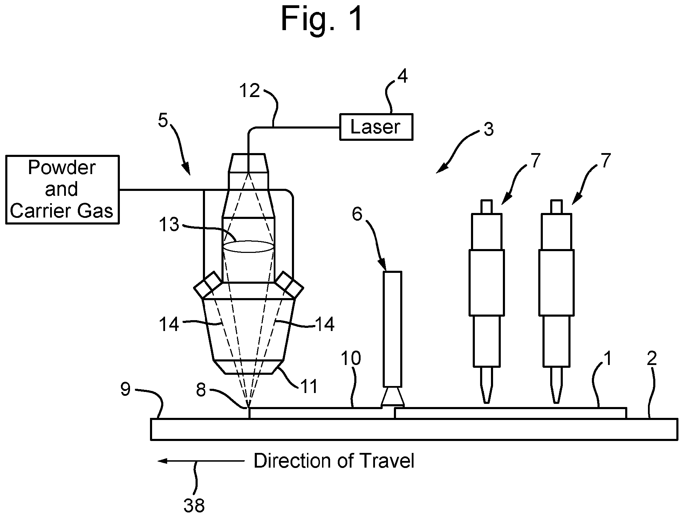

Referring to Figure 1, apparatus according to the invention is shown in operation on a work piece 1. The apparatus comprises a bed (not shown) supporting a parent plate 2 of the work piece 1 and a treatment station 3, movable with respect to the work piece 1 and bed. The treatment station 3 is made up of a heat source in the form of a high powered laser 4, a source of metallic material in the form of a powder delivery system 5, cooling means in the form of a forced cooling nozzle 6 and stress relieving means in the form of two hydraulic impact treatment tools 7.

The laser 4 is focused upon a focal point 8 on an upper surface 9 of the work piece 1, whereby to melt the surface 9 to form a weld pool. The laser 4 is controlled by a computer (not shown) to deliver a laser beam via an optical fibre 12 to conventional focussing optics 13 which focus the laser beam to the focal point 8 on the surface 9 of the work piece.

The powder delivery system 5 delivers powder to the vicinity of the laser focal point 8. Thus, the powder is sintered as it is deposited on the work piece surface to form a layer or bead 10. In the present embodiment, the powder is a metal or alloy powder, for example a stainless steel powder or a titanium powder. The powder grains have a diameter between 36µm and 106µm. The powder delivery system 5 delivers powder at a rate of three grams per minute through a deposition nozzle 11, along three delivery lines 14 disposed symmetrically around the deposition nozzle 11.

The laser apparatus 4, 13 is mounted so as to be moveable under the control of the computer in the X-Y plane parallel to the parent plate surface, and vertically in the Z direction orthogonal to it. The laser focal point 8 thus can be directed to any point in a working envelope in the X-Y plane and vertically so as to accommodate both work pieces of different height and also regions of different height within work pieces. As illustrated in the figure, the transverse direction is in the direction of arrow 38.

The laser 4 is an Nd:YAG laser operating at a wavelength of 1064nm, and having a continuous wave power output of 500w.

The bead is cooled to a crystallised state using the forced cooling gas nozzle 6. This may use air or a cryogenic spray jet, for example.

The cooled bead is then treated by the hydraulic impact treatment tools 7 to reduce residual stress and modify the microstructure of the work piece 1.

Many beads may be laid down beside one another and built on top of each other to form simple or complex parts and each bead may have residual stress and distortion minimised, by the impact treatment, with the formation of improved microstructure.

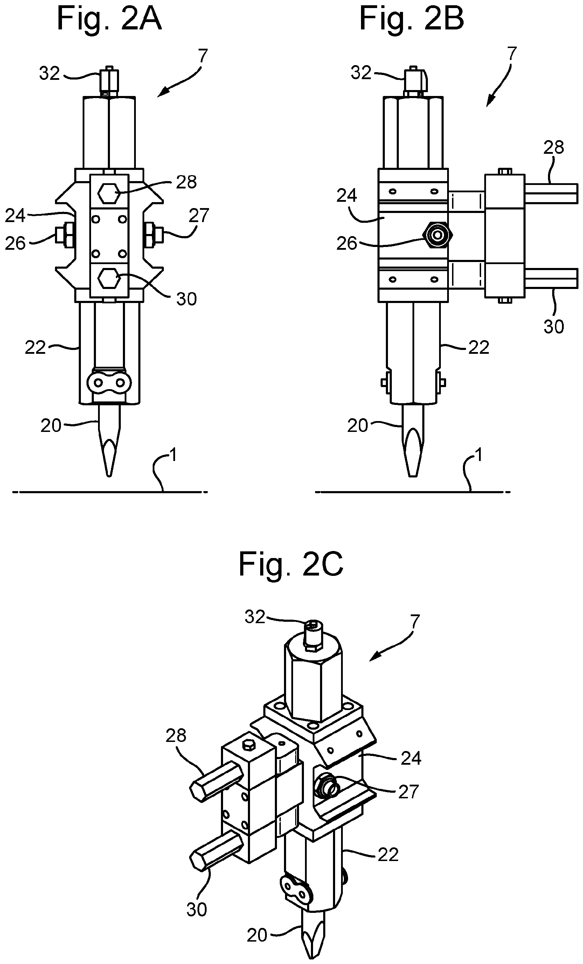

Figure 2 is a schematic illustration (not to scale) showing further details of one of the hydraulic impact treatment tools 7. Figure 2 shows three views of the hydraulic impact treatment tool 7, namely a front view A, a side view B, and a perspective view C.

In this embodiment, the hydraulic impact treatment tool 7 comprises a drill bit 20, a piledriver 22, a tool body 24, a first hydraulic connection 26, a second hydraulic connection 27, a first power adjuster 28, a second power adjuster 30, and a charging point 32.

In this embodiment, hydraulic fluid is pumped, from a compressor (not shown) into the tool body 24 via the first hydraulic connection 26. The first hydraulic connection 26 is a one-way valve through which hydraulic fluid may enter the tool body 24. The tool body 24 comprises a circuit of tubes (not shown) through which the hydraulic fluid may flow. The piledriver 22 is coupled to the circuit of tubes. The hydraulic fluid entering the tool body 24 via the first hydraulic connection 26 flows around the circuit of tubes inside the tool body 24 in a first direction, driving the piledriver 22 towards the workpiece 1 so that the drill bit 20 impacts with an upper surface of the workpiece 1. A valve inside the circuit of tubes then acts so as to cause the hydraulic fluid to circulate in a second direction opposite to the first direction. In some embodiments, the hydraulic fluid may be caused to circulate the circuit of tubes in the second direction by pumping hydraulic fluid, by the compressor, into the tool body 24 via the second hydraulic connection 28. This reversal of the direction of the flow of hydraulic fluid in the circuit of tubes moves the piledriver 22 away from the workpiece 1, so that the drill bit 20 moves away from the workpiece 1. The valve inside the circuit of tubes then switches to cause the hydraulic fluid to circulate in the first direction, and the whole process repeats. Thus, an impact treatment is applied to the workpiece by the hydraulic impact treatment tool 7.

In this embodiment, the drill bit 20 is a chisel-shaped drill bit, having a flat edge. The tip of the drill bit 20 (i.e. the free end of the drill bit 20) is rectangular in shape and has a length of approximately 12mm and a width of approximately 3mm.

The hydraulic impact treatment tool 7 is configured to cause the tip of the drill bit 20 to impact with the workpiece 1 with a frequency of between 1 and 20Hz, for example 10Hz. Also, the hydraulic impact treatment tool 7 is configured to cause the drill bit 20 to impact with the workpiece 1 at a force of around 75kN.

In this embodiment, the workpiece 1 is treated by the hydraulic impact treatment tools 7 after each new layer of material has been added and cooled, whereas in some other embodiments, the workpiece is treated each time after a plurality of new layers of material have been added and cooled. The impact treatment may be performed until the entirety of the surface has been impacted by at least one of the hydraulic impact treatment tools 7. In this embodiment, a deposited bead is in a cooled, crystallised, state prior to the impact treatment being initiated.

The hydraulic impact treatment performed by the hydraulic impact treatment tools 7 is an on-line process and has the effect of micro work hardening the metal, hence reducing residual stress and distortion within each individually deposited bead.

In this embodiment, the hydraulic impact treatment tools 7 are independently controllable, i.e. each hydraulic impact treatment tool 7 may be moved independently from the other hydraulic impact treatment tool 7, and may be caused to impact with the workpiece 1 independently from the other hydraulic impact treatment tool 7. Each hydraulic impact treatment tool 7 is controlled via a respective articulated robot arm having multiple degrees of freedom. The robot arms are mounted to the treatment station 3.

The two hydraulic impact treatment tools 7 may be operated such that they alternately impact with the same point on the surface of the workpiece 1 (not within the scope of the present invention). Thus, advantageously, a hydraulic impact treatment having a frequency that is double that of the operating frequencies of the individual hydraulic impact treatment tools 7 may be applied to the workpiece 1.

Each time a drill bit 20 impacts with the workpiece 1, the impacted portion of the workpiece 1 is plastically deformed, and a shock wave is imparted through the material of the workpiece 1, for example, to a depth of between a few hundred microns to a depth of a few millimetres. The depth of impact treatment depends on frequency and force of the impact treatment. Preferably, hydraulic impact treatment tools 7 are operated such that the impact treatment is effective for a depth up to approximately 0.5mm to 1 mm. This is consistent with the thickness of deposited material laid down by the laser apparatus 4, 13 and powder delivery system 5.

A drill bit impacting with a surface of the workpiece 1 that is proximate to a central portion of that surface of the workpiece 1, i.e. regions that are remote from edges of the workpiece, tends to cause plastic deformation of the workpiece 1 in the direction of travel of the drill bit 24 (i.e. in the Z-direction). Transverse deformation of the workpiece 1 in a direction within the X-Y plane parallel to the parent plate surface, i.e. deformation normal to the direction of travel of the drill bit 20, advantageously tends to be constrained by the surrounding material.

Conventional treatment methods, including peening and rolling methods, tend to cause significant transverse, or side-ways, deformation of parts when applied to edge portions of those parts. Such transverse deformation tends to mean that the desired deformation of the workpiece 1 in the Z-direction is reduced. Also, transverse deformation may cause a produced part to be outside allowed tolerances. Advantageously, the two hydraulic impact treatment tools 7 may be operated to impact-treat the edge portions of the workpiece 1, while not causing significant transverse deformation of the workpiece 1.

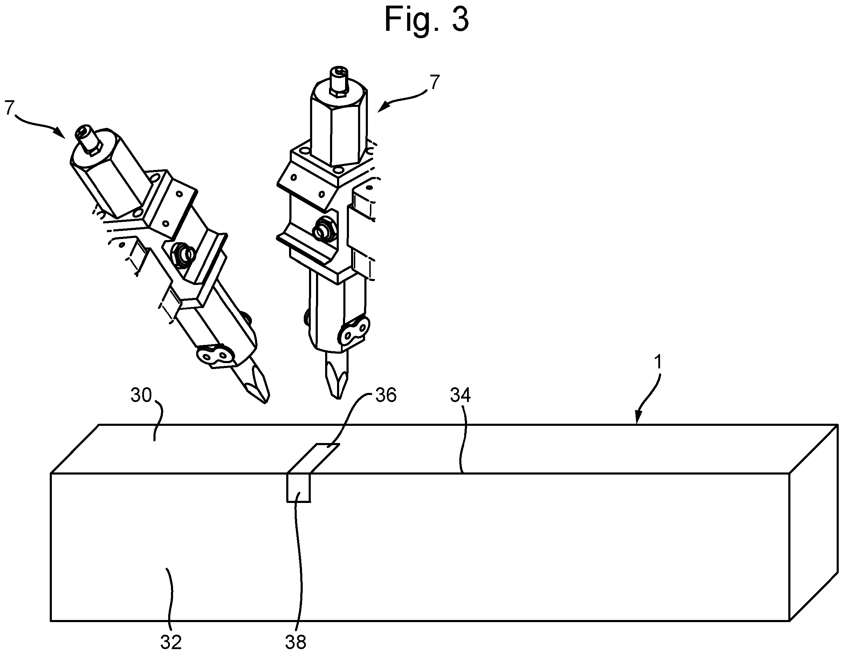

Figure 3 is a schematic illustration (not to scale) showing the two hydraulic impact treatment tools 7 performing an impact treatment process at an edge portion of the workpiece 1.

In particular, in this embodiment, the workpiece 1 comprises two contiguous and oblique surfaces, namely a first surface 30 and a second surface 32, which contact with each other along an edge 34. The first surface 30 and the second surface are perpendicular to each other.

The two hydraulic impact treatment tools 7 impact with the workpiece 1 at two respective points on the surface of the workpiece 1. A first of the hydraulic impact treatment tools 7 impacts with the workpiece 1 at a first impact region 36 on the first surface 30. The first of the hydraulic impact treatment tools 7 impacts with the workpiece 1 in a direction that is preferably normal to the first surface 30. Also, a second of the hydraulic impact treatment tools 7 impacts with the workpiece 1 at a second impact region 38 on the second surface 32. The second of the hydraulic impact treatment tools 7 impacts with the workpiece 1 in a direction that is preferably normal to the second surface 32.

The first impact region 36 is in contact with or proximate to the edge 34. The second impact region 38 is in contact with or proximate to the edge 34. The first impact region 36 and the second impact region 38 are contiguous regions and may be in contact within each other along the edge 34. The hydraulic impact treatment tools 7 are controlled such that the first impact region 36 and the second impact region 38 are impacted at the same time. This simultaneous striking of the impact regions 36, 38 by respective hydraulic impact treatment tools 7 tends to reduce or eliminate unwanted deformation of the workpiece proximate to the edge 34. In particular, any deformation of the workpiece 1 in a direction transverse to the first surface 30 caused by the first of the hydraulic impact treatment tools 7 impacting the first impact region 36 tends to be prevented by the second impact region 38 being impacted by the second of the hydraulic impact treatment tools 7. The second hydraulic impact treatment tool 7 impacts with the workpiece 1 in a direction that is opposite to the direction of side-way deformation of the workpiece 1 caused by the impact treatment of the first impact region 36 by the first tool 7. Similarly, any deformation of the workpiece 1 in a direction transverse to the second surface 32 caused by the second of the hydraulic impact treatment tools 7 impacting the second impact region 38 tends to be prevented by the first impact region 36 being impacted by the first of the hydraulic impact treatment tools 7. The first hydraulic impact treatment tool 7 impacts with the workpiece 1 in a direction that is opposite to the direction of side-way deformation of the workpiece 1 caused by the impact treatment of the second impact region 38 by the second tool 7.

It is understood that the mechanism for micro work hardening by impact treatment occurs firstly by the movement of dislocations within the material to grain boundaries. The addition of each subsequent layer applies heat to the preceding layer and the dislocations act as nucleation sites for grain re-growth. The size and number of new grains is controlled by the amount of impact treatment carried out.

The above described method of residual stress and microstructure control advantageously addresses the issues of distortion and mechanical property improvements at the time of material deposition. Currently, methods to mitigate distortion include heat treatments, stress engineering methods, optimised sequencing or artificial aging of the entire part, tend to be post-weld processes.

Advantageously, the above described method is an on-line, in-situ process that tends to reduce or eliminate the need for costly post processing.

The hydraulic impact treatment tool 7 creates a zone of residual compressive stress at the surface of the workpiece 1, where stress concentration for tensile loads is greatest.

In this embodiment, the impact treatment is carried out over the whole surface of the most recently deposited layer of material of the work piece. However, if the AM structure of the workpiece 1 being built up is to be tailored in its properties, the application of impact treatment to the workpiece 1 during build may be varied. For example, only parts of the layers may be treated or treatment may be applied to selected layers only, depending on the stiffness or strength required, for different parts of the work piece. Such variations in the treatment throughout the workpiece structure may be carried out in conjunction with variations in the deposited material, throughout the structure of the workpiece 1.

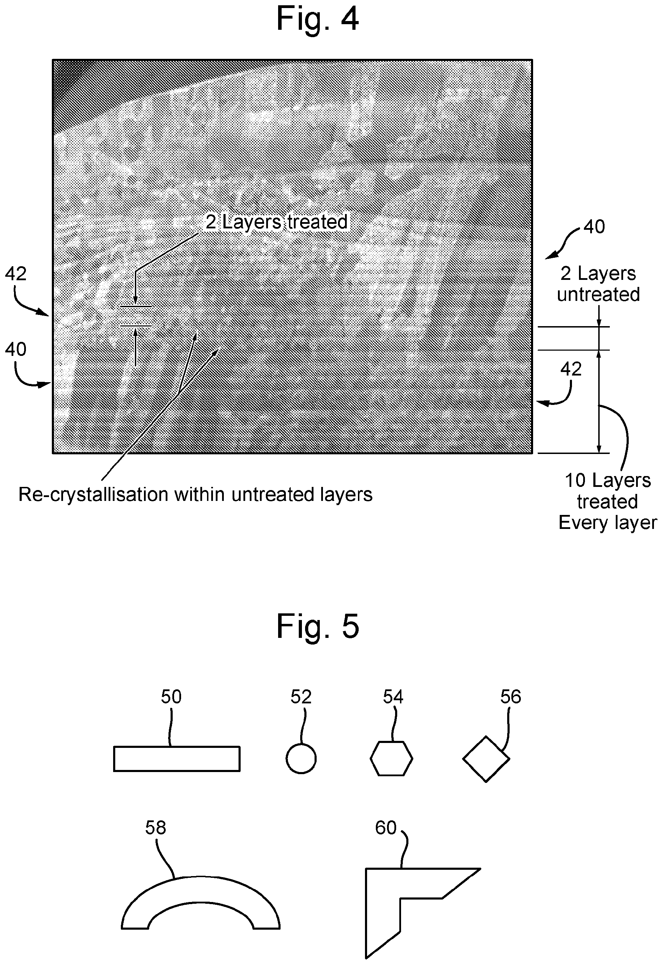

Figure 4 is a micrograph showing the effect of stress relieving the AM structure of the workpiece 1, according to the invention.

Figure 4 shows, in its lower left-hand corner and upper right-hand corner regions (indicated by the reference numeral 40), portions of the workpiece 1 where no stress relief has been carried out. In these regions 40, long columnar grains can clearly be seen.

Figure 4 also shows, in its lower right-hand corner and central left-hand corner regions (indicated by the reference numeral 42), portions of the workpiece 1 where stress relief has been carried out. In particular, in these regions 42, impact treatment has been applied to every layer of material. In these regions 42, finer grain structure resulting from the impact treatment is apparent.

Advantageously, grain refinement and grain size reduction may be achieved using the above described methods and apparatus.

The carrying out of impact treatment on the workpiece 1, according to the invention during build, tends to alleviate stress build up in the component and help to prevent distortion thereof.

The above described impact treatment and apparatus tends to be particularly useful when applied to objects produced using AM methods having high depositions rates in which relatively thick layers of material (for example, greater than 1 mm e.g. 2mm-3mm) are deposited. Such layers of material tend to be too thick for conventional treatment processes to provide the desired stress relief. In the above described method and apparatus, more energy is delivered to the peening tool, thus providing much deeper deformation (cold working). An example of an AM method having a high deposition rate is a Wire- and-Arc Manufacturing (WAAM) process.

Advantageously, the above described apparatus may be used to apply the impact treatment to parts having relatively complex geometries. Having the impact treatment tools be independently controllable, mounted on articulated robot arms, and having drill bits having relatively small tips tends to allow for targeted impact treatment. Thus, the above described impact treatment may be applied locally to a part. This tends to be particularly advantageous when repairing objects using AM process, as it is possible to apply stress relief and grain size modification only to the repair site and leave the rest of the object untreated. Many conventional treatment processes, such as rolling process, tend not to be appropriate for parts having complex geometries, and tend only to be appropriate for parts having relatively simple, planar geometries.

In the above embodiments, the stress relieving means includes two hydraulic impact treatment tools for applying the impact treatment to the workpiece. However, in other embodiments, a different number of hydraulic impact treatment tools may be used. For example, three or more hydraulic impact treatment tools may be used. Multiple tools may be used to sequentially impact with a common point on the surface of the work piece, one after the other. Thus, increasing the number of treatment tools allows the frequency of the impact treatment to be increased. In particular, using N treatment tools allows for an impact treatment having a frequency of N times the operational frequency of the treatment tools to be applied. Also, by controlling multiple impact treatment tools to simultaneously impact the workpiece on different respective surfaces that connect along an edge, unwanted distortion of the part proximate to that edge may be mitigated, and also the effectiveness of the impact treatment may be improved.

In some embodiments, a treatment tool may include multiple heads (i.e. multiple drill bits) for impacting with the workpiece. These multiple heads may be independently controllable.

In some embodiments, multiple treatment heads (i.e. multiple drill bits) are provided by one or more treatment tools and are arranged in a matrix. Each treatment head in the matrix can be controlled independently, and the operation of each can be programmed in terms of timing relative to other treatment heads, and the force applied to the workpiece. This allows a more effective treatment of a surface, particularly when the surface to be treated has a complex profile.

In the above embodiments, the impact treatment tools are hydraulically driven. However, in other embodiments one or more of the treatment tools is driven by a different energy conversion system instead of or in addition to being hydraulically driven, e.g. a treatment tool may be electromagnetically, ultrasonically, or pneumatically driven.

In the above embodiments, the treatment station is made up of multiple separate devices, namely: a material deposition device comprising the laser and the powder delivery system, a cooling device (i.e. the forced cooling nozzle), and two hydraulic impact treatment tools. In other embodiments, two or more of the devices that make up the treatment station may be provided as a combined, single device. For example, in some embodiment, a hydraulic impact treatment tool and the material deposition device (and/or the cooling device) may be end effectors of a common robot arm. This tends to reduce the equipment cost and volume of the treatment station.

In the above embodiments, a deposited bead is in a completely cooled, crystallised, state for prior to the impact treatment being initiated. However, alternatively (and outside the scope of the invention), the impact treatment is initiated prior to the deposited bead being completely cooled. For example, in some embodiments, build operations and impact treatment operation are performed simultaneously at remote regions of the workpiece.

In the above embodiments, the drill bit is a chisel-shaped drill bit, having a flat rectangular edge of dimensions 12mm by 3mm. However, in other embodiments one or more of the drill bits may have a different size and or shape. Preferably, the length of the tip of the drill bit is greater than or equal to the width of a deposited bead of material.

Figure 5 is a schematic illustration (not to scale) showing multiple alternative shapes for the cross-section of the end of a drill bit that may be used in some embodiments. A first cross-section of a drill bit tip 50 is rectangular in shape. A second cross-section of a drill bit tip 52 is circular in shape. A third cross-section of a drill bit tip 54 is hexagonal in shape. A fourth cross-section of a drill bit tip 56 is diamond in shape. The tip of a drill bit may have the shape of a different polygon instead of a rectangle, a hexagon, or a diamond, such as an octagon. A fifth cross-section of a drill bit tip 58 has a curved shape. A sixth cross-section of a drill bit tip 60 is L-shaped. In some embodiment, drill bits having recessed ends, such as the fifth and sixth drill bits 58, 60 may be used to impact multiple surfaces of a workpiece at the same time. For example, the L-shaped sixth drill bit 60 may be used to impact the first impact region 36 and the second impact region 38 at the same time along the edge 34 of the workpiece 1 shown in Figure 4 and described in more detail earlier above.

Using treatment heads having different tip shapes and sizes advantageously allows for different types of impact treatment and different coverage of the surface to be treated, as each tool produces a different indentation when it impacts the surface to be treated.

## Claims

1. A method of forming an object by additive layer manufacturing, the method comprising:
a) applying, by a heat source, heat to a portion of a surface of a workpiece sufficient to melt said portion;
b) adding material to the melted portion and moving the heat source relative to the workpiece whereby progressively to form a layer of material on the workpiece;
c) cooling the formed layer by a forced cooling device to bring at least part of the layer to a crystallised state, thereby producing a modified workpiece;
d) using a plurality of independently controllable impact treatment devices to peen the modified workpiece so as to plastically deform the cooled at least part of the layer; and
repeating steps a) to d) as required whereby to form the object;
wherein the modified workpiece comprises a first surface and a second surface, the first surface being perpendicular to the second surface; and
wherein the step of peening comprises the plurality of impact treating devices simultaneously striking a region on the first surface and a region on the second surface.

2. A method according to claim 1, wherein the region on the first surface and the region on the second surface are contiguous regions.

3. A method according to claim 1 or 2, wherein at least one of the plurality of independently controllable impact treatment devices is a hydraulic impact treatment tool.

4. A method according to any of claims 1 to 3, wherein each impact treatment device strikes the modified workpiece with a frequency of up to 20Hz.

5. A method according to any of claims 1 to 4, wherein the layer of material formed on the workpiece is 2mm to 3mm thick, and the additive manufacturing method is wire and arc manufacturing.

6. A method according to any of claims 1 to 5, wherein at least one impact treatment device comprises a peening element with which the modified workpiece is peened, the shape of the peening element being selected from the group of shapes: rectangular, chisel-shaped, and L-shaped.

7. A method according to any of claims 1 to 6, wherein the plurality of independently controllable impact treatment devices re arranged as an array.

8. A method according to any of claims 1 to 7, wherein at least one of the impact treatment devices is coupled to an articulated robot arm.

9. A method according to any of claims 1 to 8, wherein an impact treatment device and the heat source are end effectors of a common articulated robot arm.

10. A method according to any of claims 1 to 9, wherein:
an impact treatment device and the forced cooling device are end effectors of a common articulated robot arm.

11. Additive layer manufacturing apparatus for forming an object, the apparatus comprising:
a heat source configured to apply heat to a portion of a surface of a workpiece sufficient to melt said portion, the heat source being further configured to move relative to the workpiece;
material delivery means configured to add material to the melted portion whereby to form a layer of material on the workpiece;
a forced cooling device configured to cool the formed layer to bring at least part of the layer to a crystallised state, thereby producing a modified workpiece; and
a plurality of independently controllable impact treatment devices configured to peen the modified workpiece so as to plastically deform the cooled at least part of the layer, wherein the plurality of independently controllable impact treatment devices are further configured to simultaneously strike a region on a first surface and a region on a second surface of the modified workpiece, the first surface being perpendicular to the second surface.

12. A computer readable medium having computer-executable instructions adapted to cause the Additive Manufacturing apparatus of claim 11 to operate in accordance with the method of any of claims 1 to 10.

## Patentansprüche

1. Verfahren zum Ausbilden eines Objekts durch ein additives Fertigungsverfahren, das Verfahren umfassend:
a) Aufbringen, durch eine Wärmequelle, von Wärme auf einen Abschnitt einer Oberfläche eines Werkstücks, die ausreicht, um den Abschnitt zu schmelzen;
b) Hinzufügen von Material zu dem geschmolzenen Abschnitt und Bewegen der Wärmequelle relativ zu dem Werkstück, wodurch schrittweise eine Materialschicht auf dem Werkstück ausgebildet wird;
c) Abkühlen der ausgebildeten Schicht durch eine Zwangskühlvorrichtung, um mindestens einen Teil der Schicht in einen kristallisierten Zustand zu bringen, wobei dadurch ein modifiziertes Werkstück erzeugt wird;
d) Verwenden einer Vielzahl von unabhängig steuerbaren Schlagbehandlungsvorrichtungen, um das modifizierte Werkstück zu bearbeiten, um den gekühlten mindestens einen Teil der Schicht plastisch zu verformen; und
Wiederholen von Schritten a) bis d), wie erforderlich, wodurch das Objekt ausgebildet wird;
wobei das modifizierte Werkstück eine erste Oberfläche und eine zweite Oberfläche umfasst, wobei die erste Oberfläche senkrecht zu der zweiten Oberfläche ist; und
wobei der Schritt des Bearbeitens die Vielzahl von Schlagbehandlungsvorrichtungen umfasst, die auf eine Region auf der ersten Oberfläche und eine Region auf der zweiten Oberfläche gleichzeitig auftreffen.

2. Verfahren nach Anspruch 1, wobei die Region auf der ersten Oberfläche und die Region auf der zweiten Oberfläche zusammenhängende Regionen sind.

3. Verfahren nach Anspruch 1 oder 2, wobei mindestens eine der Vielzahl von unabhängig steuerbaren Schlagbehandlungsvorrichtungen ein hydraulisches Schlagbehandlungswerkzeug ist.

4. Verfahren nach einem der Ansprüche 1 bis 3, wobei jede Schlagbehandlungsvorrichtung mit einer Frequenz von bis zu 20 Hz auf das modifizierte Werkstück auftrifft.

5. Verfahren nach einem der Ansprüche 1 bis 4, wobei die Materialschicht, die auf dem Werkstück ausgebildet ist, 2 mm bis 3 mm dick ist und das additive Herstellungsverfahren eine Draht- und Bogenherstellung ist.

6. Verfahren nach einem der Ansprüche 1 bis 5, wobei mindestens eine Schlagbehandlungsvorrichtung ein Bearbeitungselement umfasst, mit dem das modifizierte Werkstück bearbeitet wird, wobei die Form des Bearbeitungselements aus der Gruppe von Formen ausgewählt ist: rechteckig, meißelförmig und L-förmig.

7. Verfahren nach einem der Ansprüche 1 bis 6, wobei die Vielzahl von unabhängig steuerbaren Schlagbehandlungsvorrichtungen als ein Array angeordnet ist.

8. Verfahren nach einem der Ansprüche 1 bis 7, wobei mindestens eine der Schlagbehandlungsvorrichtungen mit einem Gelenkroboterarm gekoppelt ist.

9. Verfahren nach einem der Ansprüche 1 bis 8, wobei eine Schlagbehandlungsvorrichtung und die Wärmequelle Endeffektoren eines gemeinsamen Gelenkroboterarms sind.

10. Verfahren nach einem der Ansprüche 1 bis 9, wobei:
eine Schlagbehandlungsvorrichtung und die Zwangskühlvorrichtung Endeffektoren eines gemeinsamen Gelenkroboterarms sind.

11. Additive Herstellungseinrichtung zum Ausbilden eines Objekts, die Einrichtung umfassend:
eine Wärmequelle, die konfiguriert ist, um Wärme auf einen Abschnitt einer Oberfläche eines Werkstücks aufzubringen, die ausreicht, um den Abschnitt zu schmelzen, wobei die Wärmequelle ferner konfiguriert ist, um sich relativ zu dem Werkstück zu bewegen;
Materialabgabemittel, die konfiguriert sind, um dem geschmolzenen Abschnitt Material hinzuzufügen, wodurch eine Materialschicht auf dem Werkstück ausgebildet wird;
eine Zwangskühlvorrichtung, die konfiguriert ist, um die ausgebildete Schicht zu kühlen, um mindestens einen Teil der Schicht in einen kristallisierten Zustand zu bringen, wobei dadurch ein modifiziertes Werkstück erzeugt wird; und
eine Vielzahl von unabhängig steuerbaren Schlagbehandlungsvorrichtungen, die konfiguriert ist, um das modifizierte Werkstück zu bearbeiten, um den gekühlten mindestens einen Teil der Schicht plastisch zu verformen, wobei die Vielzahl von unabhängig steuerbaren Schlagbehandlungsvorrichtungen ferner konfiguriert ist, um auf eine Region auf einer ersten Oberfläche und eine Region auf einer zweiten Oberfläche des modifizierten Werkstücks gleichzeitig aufzutreffen, wobei die erste Oberfläche senkrecht zu der zweiten Oberfläche ist.

12. Computerlesbares Medium, das computerausführbare Anweisungen aufweist, die angepasst sind, um die additive Herstellungseinrichtung nach Anspruch 11 zu veranlassen, um gemäß dem Verfahren nach einem der Ansprüche 1 bis 10 zu arbeiten.

## Revendications

1. Procédé de formation d'un objet par fabrication additive par couches, le procédé comprenant :
a) l'application, par une source de chaleur, d'une chaleur à une partie d'une surface d'une pièce suffisante pour faire fondre ladite partie ;
b) l'ajout de matériau à la partie fondue et le déplacement de la source de chaleur par rapport à la pièce de manière à former progressivement une couche de matériau sur la pièce ;
c) le refroidissement de la couche formée par un dispositif de refroidissement forcé pour amener au moins une partie de la couche dans un état cristallisé, produisant ainsi une pièce modifiée ;
d) l'utilisation d'une pluralité de dispositifs de traitement par impact pouvant être commandés indépendamment pour marteler la pièce modifiée de manière à déformer plastiquement l'au moins une partie refroidie de la couche ; et
la répétition des étapes a) à d) selon le besoin de manière à former l'objet ;
dans lequel la pièce modifiée comprend une première surface et une seconde surface, la première surface étant perpendiculaire à la seconde surface ; et
dans lequel l'étape de martelage comprend le fait que la pluralité de dispositifs de traitement par impact frappent simultanément une région sur la première surface et une région sur la seconde surface.

2. Procédé selon la revendication 1, dans lequel la région sur la première surface et la région sur la seconde surface sont des régions contiguës.

3. Procédé selon la revendication 1 ou 2, dans lequel au moins l'un de la pluralité de dispositifs de traitement par impact pouvant être commandés indépendamment est un outil de traitement par impact hydraulique.

4. Procédé selon l'une quelconque des revendications 1 à 3, dans lequel chaque dispositif de traitement par impact frappe la pièce modifiée suivant une fréquence allant jusqu'à 20 Hz.

5. Procédé selon l'une quelconque des revendications 1 à 4, dans lequel la couche de matériau formée sur la pièce a une épaisseur de 2 mm à 3 mm, et le procédé de fabrication additive est une fabrication par arc-fil.

6. Procédé selon l'une quelconque des revendications 1 à 5, dans lequel au moins un dispositif de traitement par impact comprend un élément de martelage avec lequel la pièce est martelé, la forme de l'élément de martelage étant choisie dans le groupe de formes : rectangulaire, en forme de ciseau et en forme de L.

7. Procédé selon l'une quelconque des revendications 1 à 6, dans lequel la pluralité de dispositifs de traitement par impact pouvant être commandés indépendamment sont agencés en réseau.

8. Procédé selon l'une quelconque des revendications 1 à 7, dans lequel au moins l'un des dispositifs de traitement par impact est couplé à un bras robotique articulé.

9. Procédé selon l'une quelconque des revendications 1 à 8, dans lequel un dispositif de traitement par impact et la source de chaleur sont des effecteurs terminaux d'un bras robotique articulé commun.

10. Procédé selon l'une quelconque des revendications 1 à 9, dans lequel :
un dispositif de traitement par impact et le dispositif de refroidissement forcé sont des effecteurs terminaux d'un bras robotique articulé commun.

11. Appareil de fabrication additive par couches permettant de former un objet, l'appareil comprenant :
une source de chaleur configurée pour appliquer, à une partie d'une surface d'une pièce, une chaleur suffisante pour faire fondre ladite partie, la source de chaleur étant en outre conçue pour se déplacer par rapport à la pièce ;
un moyen de distribution de matériau conçu pour ajouter du matériau à la partie fondue de manière à former une couche de matériau sur la pièce ;
un dispositif de refroidissement forcé configuré pour refroidir la couche formée pour amener au moins une partie de la couche dans un état cristallisé, produisant ainsi une pièce modifiée ; et
une pluralité de dispositifs de traitement par impact pouvant être commandés indépendamment configurés pour marteler la pièce modifiée de manière à déformer plastiquement l'au moins une partie refroidie de la couche, dans lequel la pluralité de dispositifs de traitement par impact pouvant être commandés indépendamment sont en outre configurés pour frapper simultanément une région sur une première surface et une région sur une seconde surface de la pièce modifiée, la première surface étant perpendiculaire à la seconde surface.

12. Support lisible par ordinateur ayant des instructions exécutables par ordinateur configurées pour amener l'appareil de fabrication additive selon la revendication 11 à fonctionner conformément au procédé selon l'une quelconque des revendications 1 à 10.
